# EUROPEAN PATENT SPECIFICATION

(11) **EP 2 908 017 B1**
(45) Date of publication and mention of the grant of the patent: **01.08.2018**
(21) Application number: 13845153.9
(22) Date of filing: 19.09.2013
(51) Int. Cl.: F16C 11/06

(54) **DUST COVER FOR BALL JOINT**
STAUBABDECKUNG FÜR KUGELGELENK
CACHE-POUSSIÈRE POUR JOINT À ROTULE

(30) Priority: 12.10.2012 JP 2012226550
(43) Date of publication of application: 19.08.2015
(73) Proprietor: NOK Corporation, Tokyo 105-8585 (JP)
(72) Inventor: KANAGAWA, Koji, Makinohara-shi Shizuoka 421-0532 (JP)
(74) Representative: TBK
(86) International application number: PCT/JP2013/075239
(87) International publication number: WO 2014/057779

(56) References cited:
- JP-A- H 094 725
- JP-A- S5 349 658
- JP-A- H10 205 524
- JP-A- 2004 176 872
- JP-A- 2012 052 614
- JP-A- 2013 160 326
- JP-U- S6 054 868
- JP-U- S6 213 270
- US-A- 3 901 518

## Description

### Technical Field

The present invention relates to a dust cover for a ball joint according to the preamble of claim 1.

Further, the present invention relates to a dust cover for a ball joint which is used in an automobile suspension device, and a steering device.

### Description of the Conventional Art

Patent document 3 shows a generic dust cover for a ball joint according to the preamble of claim 1.

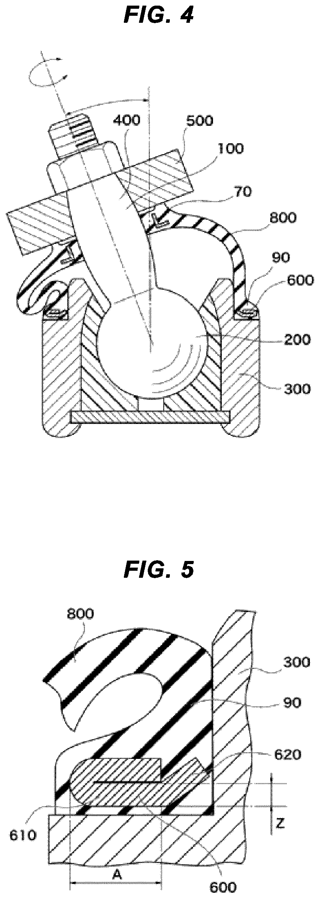

Conventionally, as a ball joint to which a dust cover is installed for the purpose of a dust prevention and a water prevention in a ball joint coupling portion, there has been known a dust cover for a ball joint which is described in Figs. 4 and 5 (patent documents 1 and 2).

In a seal structure of this kind of dust cover for the ball joint, a spherical head portion 200 formed in one end of a ball stud 100 is retained within a socket 300, as shown in Figs. 4 and 5.

Further, a shaft portion 400 in the other end of the ball stud 100 is fastened and fixed to a knuckle 500.

On the other hand, a one end large-diameter opening portion 90 of a dust cover made of a rubber-like elastic material is fixed and retained to an outer peripheral surface of the socket 300 by a reinforcement ring 600 which is buried in the one end large-diameter opening portion 600 and is made of a metal material, and the other end small-diameter opening portion 70 is retained to the shaft portion 400.

Further, a film portion 800 is formed as a whole into a hand drum shape, the film portion 800 connecting the one end large-diameter opening portion 60 and the other end small-diameter opening portion 70.

The reinforcement ring 600 is constructed by a base portion 610, and a blade portion 620 which extends from the base portion 610 toward an outer peripheral surface of the socket 300.

Further, since the blade portion 620 eats into the outer peripheral surface of the socket 300, the dust cover is prevented from breaking away from the socket 300.

Therefore, the blade portion 620 is necessarily provided with a spring elasticity. On the other hand, the base portion 610 is necessarily provided with a sufficient rigidity to prevent a sealing performance from being lowered by deformation of the base portion 610 when the large-diameter opening portion 60 is pressed onto the socket 300.

This kind of reinforcement ring 600 made of metal material is manufactured by folding an outer peripheral side of an annular thin plate having a thickness Z, as shown in Fig. 5.

Accordingly, a width A in a diametrical direction of the base portion 610 is necessarily enlarged.

As a result, the film portion 800 in a compression side (a left side on the drawing) interferes with the one end large-diameter opening portion 90 as shown in Fig. 4, and a problem that the film portion 800 wears off and is damaged in an early stage has been brought about.

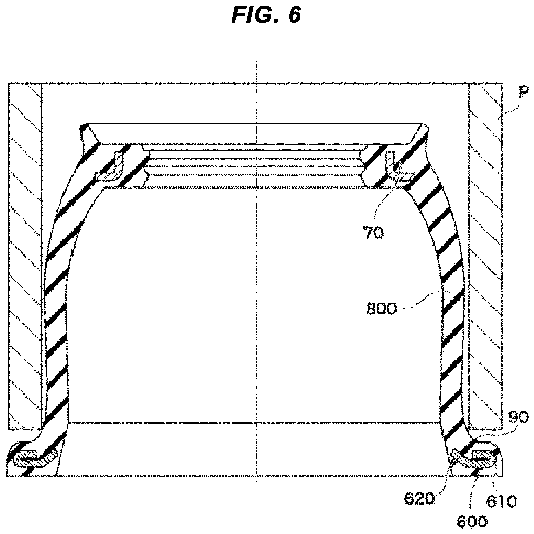

Further, in the case that the width A in the diametrical direction of the base portion 610 is sufficient, the base portion 610 can be pressed by a press fit jig P as shown in Fig. 6. Therefore, the dust cover can be installed to the socket 300 with no problem. However, in the case that protrusion toward an outer side in the diametrical direction of the one end large-diameter opening portion 90 is reduced for avoiding interference of the film portion 800 in the compression side with the one end large-diameter opening portion 90, the width A in the diametrical direction of the base portion 610 is necessarily narrowed. As a result, an area at which the base portion 610 can be pressed by the press fit jig P is reduced, and a problem that it is hard to push the one end larger-diameter opening portion 90 onto the socket 300 has been caused.

In the same manner, in recent years, it has been strongly desired to make the ball joint compact, and the diameter of the socket 300 has been made as small as possible. As a result, a space for setting a step portion of the socket to which the one end large-diameter opening portion 90 is installed, has been restricted. As a result, the area at which the base portion 610 can be pressed by the press fit jig P has been reduced, and the problem that it is hard to press the one end large-diameter opening portion 90 to the socket 300 has been brought about.

### Prior Art Document

### Patent Documents

Patent Document 1: JP 2009 024834 A
Patent Document 2: JP 2001 323923 A
Patent Document 3: JP H10 205524 A

### Disclosure of the Invention

### Problem to be Solved by the Invention

The present invention is made by taking the problem mentioned above into consideration, and an object of the present invention is to provide a dust cover for a ball joint which can easily be compressed at one end large-diameter opening portion onto a socket even if a width in a diametrical direction of a base portion of a reinforcement ring becomes narrow, the reinforcement ring being buried in the one end large-diameter opening portion and being made of a metal material, this even in case of a compact structure of the ball joint.

### Means for Solving the Problem

The above problem is solved by the present invention with a dust cover according to claim 1.

### Effect of the Invention

The present invention achieves effects described below.

According to the dust cover for the ball joint of the invention described above, the dust cover for the ball joint is structured such that the concave portion is provided in the outer peripheral surface of the joint portion between the one end large-diameter opening portion and the film portion. As a result, even if the width in the diametrical direction of the base portion of the reinforcement ring becomes narrow, the reinforcement ring being buried in the one end large-diameter opening portion and being made of metal material, and even in case of a compact structure of the ball joint the one end large-diameter opening portion can be easily compressed onto the socket.

Preferably, a plurality of concave portions are uniformly provided circumferentially. It is possible to inhibit the film portion from peculiarly deforming, and it is possible to minimize reduction of a strength of the film portion.

More preferably, the dust cover for the ball joint is particularly effectively structured such that an outer diameter of the reinforcement ring made of metal material is equal to or smaller than a maximum outer diameter of the film portion.

### Brief Description of the Drawings

Fig. 1 is a vertical cross sectional view of a dust cover for a ball joint according to the present invention;
Fig. 2 is an enlarged view of a substantial part of the dust cover for the ball joint according to the present invention;
Fig. 3 is a vertical cross sectional view of a state of attaching a jig for installing the dust cover for the ball joint according to the present invention to a socket;
Fig. 4 is a vertical cross sectional view of a dust cover for a ball joint according to a prior art;
Fig. 5 is an enlarged view of a substantial part in Fig. 4; and
Fig. 6 is a vertical cross sectional view of a state of attaching a jig for installing the dust cover for the ball joint according to the prior art to the socket.

### Mode for Carrying Out the Invention

A description will be given below of an embodiment for carrying out the present invention.

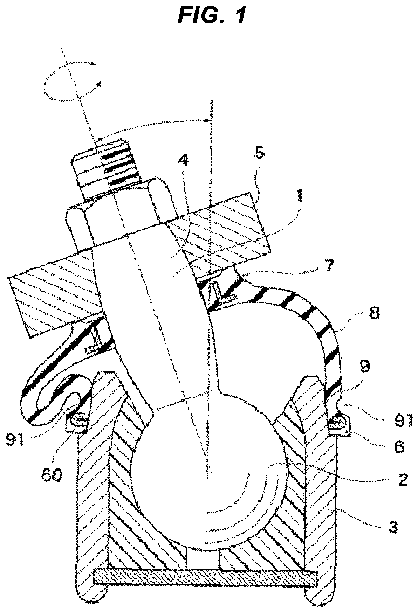

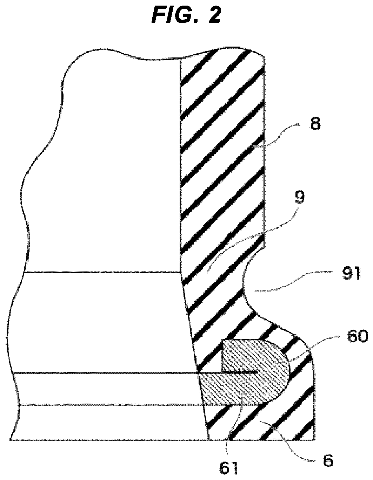

As shown in Figs. 1 and 2, a dust cover for a ball joint according to the present invention is structured such that a spherical head portion 2 formed in one end of a ball stud 1 is retained within a socket 3, a shaft portion 4 in the other end of the ball stud 1 is fastened and fixed to a knuckle 5, a one end large-diameter opening portion 6 is fixed and retained to an outer peripheral surface of the socket 3, the one end large-diameter opening portion having a reinforcement ring 60 made of a metal material and buried therein, the other end small-diameter opening portion 7 is retained to the shaft portion 4, and a film portion 8 is provided for connecting the one end large-diameter opening portion 6 and the other end small-diameter opening portion 7, the film portion 8 protruding to an outer side and being formed approximately into a hand drum shape.

Further, a concave portion 91 is provided in an outer peripheral surface of a joint portion 9 between the one end large-diameter opening portion 6 and the film portion 8.

As mentioned above, since the concave portion 91 is provided, the one end large-diameter opening portion 6 can be easily compressed onto the socket 3 even in the mode in which the width in the diametrical direction of the base portion 61 of the reinforcement ring 60 becomes narrow, the reinforcement ring 60 being buried in the one end large-diameter opening portion 6 and being made of metal material.

The concave portion 91 may be formed into an annular shape, however, it is preferable that a plurality of concave portions 91 are uniformly provided circumferentially since it is possible to suppress peculiar deformation of the film portion 8 and it is possible to minimize reduction of the strength of the film portion 8.

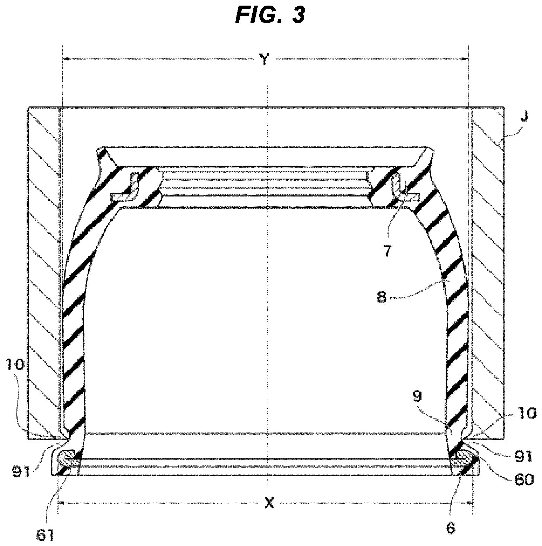

Further, in the case that the dust cover for the ball joint is installed to the socket 3, a compressing force of a split installation jig J can be transmitted to the base portion 61 of the reinforcement ring 60 made of the metal material via projections 10 and 10, by inserting the projections 10 and 10 into the concave portions 91 and 91, and thereafter compressing the installation jig J (moving downward in the drawing), the projections 10 and 10 being provided at leading ends of the jig J which is separated into a plurality of sections, and protruding inward in a diametrical direction, and the concave portions 91 and 91 being uniformly provided circumferentially, as shown in Fig. 3.

Therefore, even in the mode in which the width in the diametrical direction of the base portion 61 of the reinforcement ring 60 is narrowed as shown in Fig. 3, the one end large-diameter opening portion 6 can be easily compressed and installed to the socket 3.

Further, in the case that an outer diameter X of the reinforcement ring 60 made of metal material is equal to or smaller than a maximum outer diameter Y of the film portion 8, the installation can not be achieved at all by the conventional installation jig P as shown in Fig. 6. Therefore, the mode according to the present invention is particularly effective, the mode being structured such that the concave portions 91 are provided in the outer peripheral surface of the joint portion 9 between the one end large-diameter opening portion 6 and the film portion 8.

Further, the reinforcement ring 60 can employ various modes which are manufactured by a sheet metal processing and a forging process.

Further, the dust cover is formed by various rubber-like elastic materials.

Since the reinforcement ring 60 can be made compact without taking an installation performance into consideration, it is possible to further reduce risk that the film portion 8 interferes with the one end large-diameter opening portion 6.

Further, it goes without saying that the present invention is not limited to the best mode for carrying out the invention mentioned above, but can employ the other various structures without deviating from the scope of the present invention.

### Industrial Applicability

The present invention can be used in the ball joint which is used in the suspension device and the steering device of the motor vehicle.

### Description of Reference Numerals

1 ball stud
2 spherical head portion
3 socket
4 shaft portion
5 knuckle
6 one end large-diameter opening portion
7 other end small-diameter opening portion
8 film portion
9 joint portion
10 projection
60 reinforcement ring
61 base portion
91 concave portion

## Claims

1. A dust cover for a ball joint comprising:
a spherical head portion (2) formed in one end of a ball stud (1), the spherical head portion being retained within a socket (3);
a shaft portion (4) provided in the other end of said ball stud (1), the shaft being fastened and fixed to a knuckle (5);
a one end large-diameter opening portion (6) fixable and retainable to an outer peripheral surface of said socket (3), the one end large-diameter opening portion having a reinforcement ring (60) made of a metal material and buried therein;
the other end small-diameter opening portion (7) retainable to said shaft portion (4);
a film portion (8) connecting said one end large-diameter opening portion (6) and said other end small-diameter opening portion (7), protruding to an outer side and formed approximately into a hand drum shape; and
the dust cover for the ball joint being made of a rubber-like elastic material, **characterized in that**
a concave portion (91) is provided in an outer peripheral surface of a joint portion (9) between said one end large-diameter opening portion (6) and said film portion (8).

2. The dust cover for the ball joint according to claim 1, wherein a plurality of said concave portions (91) are uniformly provided circumferentially.

3. The dust cover for the ball joint according to claim 1 or 2, wherein an outer diameter (X) of said reinforcement ring (60) made of the metal material is equal to or smaller than a maximum outer diameter (Y) of said film portion (8).

## Patentansprüche

1. Schutzabdeckung für ein Kugelgelenk, mit:
einem kugelförmigen Kopfabschnitt (2), der an einem Ende eines Kugelzapfens (1) ausgebildet ist, wobei der kugelförmige Kopfabschnitt in einer Buchse (3) gehalten ist;
einem Wellenabschnitt (4), der an dem anderen Ende des Kugelzapfens (1) vorgesehen ist, wobei die Welle an einer Krempe (5) befestigt und fixiert ist;
einem Großdurchmesseröffnungsabschnitt (6) eines Endes, der an einer Außenumfangsfläche der Buchse (3) fixierbar und haltbar ist, wobei der Großdurchmesseröffnungsabschnitt eines Endes einen Verstärkungsring (60) hat, der aus einem Metallwerkstoff gemacht ist und darin verborgen ist;
dem Kleindurchmesseröffnungsabschnitt (7) des anderen Endes, der an dem Wellenabschnitt (4) haltbar ist;
einem Schichtabschnitt (8), der den Großdurchmesseröffnungsabschnitt (6) des einen Endes und den Kleindurchmesseröffnungsabschnitt (7) des anderen Endes verbindet, zu einer Außenseite vorsteht und näherungsweise zu einer Handtrommelform ausgebildet ist; und
wobei die Schutzabdeckung für das Kugelgelenk aus einem gummiartigen elastischen Werkstoff gemacht ist, **dadurch gekennzeichnet, dass**
ein konkaver Abschnitt (91) an einer Außenumfangsfläche eines Verbindungsabschnitts (9) zwischen dem Großdurchmesseröffnungsabschnitt (6) eines Endes und dem Schichtabschnitt (8) vorgesehen ist.

2. Schutzabdeckung für das Kugelgelenk nach Anspruch 1, wobei eine Vielzahl der konkaven Abschnitte (91) in Umfangsrichtung gleichmäßig vorgesehen ist.

3. Schutzabdeckung für das Kugelgelenk nach Anspruch 1 oder 2, wobei ein Außendurchmesser (X) des Verstärkungsrings (60), der aus dem Metallwerkstoff gemacht ist, gleich wie oder kleiner als ein maximaler Außendurchmesser (Y) des Schichtabschnitts (8) ist.

## Revendications

1. Cache-poussière pour un joint à rotule comprenant :
une section de tête sphérique (2) formée à une extrémité d'un pivot à rotule (1), la section de tête sphérique étant maintenue à l'intérieur d'un embout femelle (3) ;
une section d'arbre (4) disposée à l'autre extrémité dudit pivot à rotule (1), l'arbre étant attaché et fixé à un joint d'articulation (5) ;
une section d'ouverture de grand diamètre à une extrémité (6) pouvant être fixée et maintenue sur une surface périphérique extérieure dudit embout femelle (3), la section d'ouverture de grand diamètre à une extrémité comportant une bague de renfort (60) faite d'un matériau métallique et intégrée dedans ;
une section d'ouverture de petit diamètre à l'autre extrémité (7) pouvant être maintenue sur ladite section d'arbre (4) ;
une section de film (8) raccordant ladite section d'ouverture de grand diamètre à une extrémité (6) et ladite section d'ouverture de petit diamètre à l'autre extrémité (7),
dépassant vers l'extérieur et étant pratiquement de la forme d'un tambour ; et
le cache-poussière pour le joint à rotule étant fait d'un matériau élastique ressemblant à du caoutchouc, **caractérisé en ce que**
une section concave (91) est disposée à une surface périphérique extérieure d'une section de joint (9) entre ladite section d'ouverture de grand diamètre à une extrémité (6) et ladite section de film (8).

2. Cache-poussière pour le joint à rotule selon la revendication 1, dans lequel une pluralité desdites sections concaves (91) est disposée de manière uniforme au niveau de la circonférence.

3. Cache-poussière pour le joint à rotule selon la revendication 1 ou 2, dans lequel un diamètre extérieur (X) de ladite bague de renfort (60) faite du matériau métallique est inférieur ou égal à un diamètre extérieur maximum (Y) de ladite section de film (8).
